Europäisches Patentamt

**European Patent Office**

Office européen des brevets

(11) Veröffentlichungsnummer: **0 222 399 B1**

(12) **EUROPÄISCHE PATENTSCHRIFT**

(45) Veröffentlichungstag der Patentschrift: **17.07.91**

(51) Int. Cl.⁵: **B29C 67/24**, B29K 105/06

(21) Anmeldenummer: **86115748.5**

(22) Anmeldetag: **12.11.86**

(54) **Verstärkungsmaterial und Verfahren zu seiner Herstellung.**

(30) Priorität: **15.11.85 DE 3540537**

(43) Veröffentlichungstag der Anmeldung:
**20.05.87 Patentblatt 87/21**

(45) Bekanntmachung des Hinweises auf die
Patenterteilung:
**17.07.91 Patentblatt 91/29**

(84) Benannte Vertragsstaaten:
**AT BE CH DE ES FR GB GR IT LI LU NL SE**

(56) Entgegenhaltungen:
**EP-A- 0 013 244       EP-A- 0 102 335
DE-A- 2 315 259       FR-A- 2 223 173
FR-A- 2 237 743       GB-A- 1 179 043
US-A- 3 316 139       US-A- 3 676 288
US-A- 3 788 937       US-A- 3 922 419
US-A- 4 281 492       US-A- 4 423 109
US-A- 4 481 241**

(73) Patentinhaber: **Kölzer, Klaus Kurt
Benrather Schlossufer 65b
W-4000 Düsseldorf(DE)**

(72) Erfinder: **Kölzer, Klaus Kurt
Benrather Schlossufer 65b
W-4000 Düsseldorf(DE)**

(74) Vertreter: **Eggert, Hans-Gunther, Dr.
Räderscheidtstrasse 1
W-5000 Köln 41(DE)**

Rank Xerox (UK) Business Services

## Beschreibung

Die Erfindung betrifft ein Verstärkungsmaterial für Duroplaste sowie ein Verfahren zu seiner Herstellung.

Bei der Herstellung von Formteilen aus Kunststoff ist man in zunehmendem Maße aus konstruktiven Gründen und aus Gründen der Wirtschaftlichkeit bestrebt, das Gewicht zu reduzieren, ohne die mechanischen Festigkeiten zu beeinträchtigten.

Durch das Verstärken von Kunststoffen mit Fasern entstehen sogenannte Faserverbundwerkstoffe, die sich gegenüber den unverstärkten Kunststoffen durch einen wesentlich höheren Elastizitätsmodul auszeichnen, d.h. eine höhere Steifigkeit und damit eine höhere Belastbarkeit besitzen. Insbesondere Faserverbundwerkstoffe aus Duroplasten, wie den klassischen Amino- und Phenoplasten, Epoxidharzen (EP-Harze), Polyester- (UP-Harze) und anderen Reaktionsharzen finden breite und vielseitige Einsatzgebiete, u.a. als härtbare Formmassen, Schichtpressstoffe, Gießharze oder für den Oberflächenschutz.

Glasfaserverstärkte Epoxid- oder Polyesterharze zählen zu den gebräuchlichsten Faserverbundwerkstoffen. Formteile aus diesem Werkstoff werden hergestellt, indem man die Glasfasern mit den flüssigen duroplastischen Harzen benetzt und in eine Form bringt. Das Aushärten wird durch einen dem flüssigen Kunststoffharz zugesetzten Katalysator bewirkt. Glasfaserverstärkte Kunststoffe werden drucklos oder durch verschiedene Niederdruckverfahren geformt und verarbeitet, und zwar bevorzugt zu großen Formstücken, wie Bootskörpern, Fahrzeugteilen, Lagerbehältern, Rohren usw., die sich durch eine ungewöhnlich hohe Gebrauchsfestigkeit bei niedrigem Gewicht auszeichnen. Die Gebrauchs- und Festigkeitseigenschaften derartiger Materialien hängen einerseits von der Qualität der Verstärkungsfaser und der verwendeten Harze und andererseits von dem Gewichtsverhältnis der Verstärkungsfasern zur Harzmatrix ab. Die Festigkeitswerte sind umso besser, je höher der Gewichtsanteil der Verstärkungsfasern ist.

Bei der Herstellung großvolumiger Formteile und bei der Herstellung kleinerer Formteilserien, zu deren Anfertigung die Herstellung teurer Presswerkzeuge wirtschaftlich nicht vertretbar ist, wird im drucklosen Verfahren gearbeitet. Unter den drucklosen Verfahren ist z.B. das Handlaminieren zu nennen, bei dem das Formteil schichtweise aus Flächengebilden, wie Matten, Geweben, Vliesen und dergleichen, die mit flüssigem Harz benetzt sind, bis zu der gewünschten Materialstärke aufgebaut wird.

Ebenfalls drucklos arbeitet das Wickelverfahren, bei dem harzgetränkte Verstärkungsbahnen oder -faserstränge auf einen Dorn oder zylinderförmige Formen aufgewickelt und gehärtet werden.

Bei dem Zieh-Verfahren werden Verstärkungsbahnen oder -faserstränge ebenfalls mit Harz benetzt und abschliessend durch Profildüsen gezogen.

Der Anteil von Verstärkungsfasern am Gesamtgewicht eines Faserverbundwerkstoffes, der für die Festigkeitseigenschaften bestimmend ist, kann bei den drucklosen Verfahren jedoch nur in bestimmten Grenzen beeinflusst werden. Beim Tränken von Verstärkungsfasern mit flüssigen Harzen füllen sich entsprechend der Saugfähigkeit der Fasern die zwischen den Elementarfäden liegenden Hohlräume mit Harz. Der Anteil der Verstärkungsfasern am Gesamtgewicht ist also umso geringer, je größer die Saugfähigkeit der Verstärkungsfasern, bezogen auf das Volumen, ist.

Die im Handel als Verstärkungsmaterial für Faserverbundwerkstoffe erhältlichen Glasfasern besitzen marktübliche Standardqualitäten mit definierter Harzaufnahmefähigkeit, die dem Konstrukteur eine Berechnung des spezifischen Gewichts und des Gesamtgewichts eines Formkörpers ermöglichen.

Beispielsweise nehmen Glasfasermatten, die aus geschnittenen oder endlosen Spinnfäden bestehen, etwa 70 bis 75 Gew.% Harz auf, während die Aufnahmefähigkeit von Glasfasergeweben aus Garnen, Zwirnen oder Rovings etwa 65 bis 70 % erreicht.

Bei Gelegen, bei denen die Garne, Zwirne oder Rovings nicht miteinander verwebt, sondern durch Steppfäden an den Kreuzungspunkten miteinander verbunden sind, beträgt die Harzaufnahmefähigkeit noch etwa 60 bis 65 %.

Dementsprechend wird bei Laminaten, die aus Glasfasermatten hergestellt werden, ein spezifisches Gewicht von ca. 1,5 bis 1,7 erreicht, während das spezifische Gewicht von Geweben und Gelegen bei ca. 1,7 bis 1,9 liegt.

Zur Reduzierung des Gewichts von Kunststofformteilen ohne Verlust an mechanischer Festigkeit kann bei gleichem Anteil an Verstärkungsfasern das Harz partiell durch Füllstoffe ersetzt werden, deren spezifisches Gewicht geringer ist als das des Tränkharzes. Demgemäß geeignet sind Leichtfüllstoffe, insbesondere sog. Hohlkörperfüllstoffe, auch "Microspheres" genannt, die sowohl anorganischer als auch organischer Natur sein können.

Hohle Mikroglaskügelchen stellen einen Leichtfüllstoff dar, der das zur Dichteverminderung erforderliche geringe spezifische Gewicht aufweist. Derartige hohle Mikrokügelchen können auch aus einem polymeren organischen Material bestehen und sind z.B. unter dem Handelsnamen Expancel® mit einer thermoplastischen Schale aus einem Vinylidenchlorid-Acrylnitril-Copolymeren erhältlich. Die Korngröße liegt zwischen 50 und 300 $\mu$m und die Dichte beträgt etwa 20 bis 40 kg/m$^3$.

Handelsüblich ist auch die ungeblähte Vorstufe dieser Hohlkörperfüllstoffe, z.B. auf Basis von Polyvinylchlorid oder Vinyliden-Acrylnitril-Copolymeren mit einem Blähmittel, wie z.B. Isobutan. Die ungeblähten Partikel (z.B. "unexpanded" Expancel®) besitzen Teilchengrößen von 5 bis 10 μm. Zum Aufblähen werden sie Temperaturen von etwa 80 bis 150°C ausgesetzt, die dem Erweichungspunkt des Materials der Mikrokügelchen entsprechen. Sobald der Erweichungspunkt erreicht ist, bläht das eingeschlossene Treibgas durch Verdampfung die einzelnen Füllstoffpartikel zu einer Hohlkugel auf.

Wegen des niedrigen Gewichts der Hohlkörperfüllstoffe ist versucht worden, sie zur Gewichtsreduzierung in Faserverbundwerkstoffe einzuarbeiten, indem man sie dem Laminierharz zumischte. Bei dieser Methode wird jedoch die Viskosität und damit das Laminierverhalten der Tränkharze nachteilig beeinflusst und es gelingt nicht, die relativ grobkörnigen Hohlkörperfüllstoffe in die Zwischenräume der Verstärkungsfasern einzubringen, sondern sie werden an der Oberfläche zurückgehalten. Eine weitere Schwierigkeit liegt darin, daß die empfindlichen Hohlkörperfüllstoffe keiner großen mechanischen Belastung standhalten, so daß sie bereits beim Einrühren in das Laminierharz oder während des eigentlichen Laminierungsprozesses teilweise zerstört werden und damit nicht mehr zu der beabsichtigten Gewichtsminderung beitragen können.

Es ist auch bekannt, die unexpandierten Mikrokügelchen, zusammen mit dem Latex eines aushärtbaren Bindemittels auf eine Bahn von textilen Stapelfasern aufzusprühen und die so erhaltene Bahn auf den Erweichungspunkt des Thermoplasten der Mikrokügelchen zu erhitzen. Dadurch wird ein sehr voluminöses, nicht gewebtes Gebilde mit hoher Wasseradsorptionsfähigkeit erhalten, das für Staub- oder Wischtücher sowie als Verbandmaterial dienen kann (US-A-3676288). Solche gebundenen Faserbahnen wurden auch schon mit einem flüssigen Harz-Härter-Gemisch imprägniert und für die Herstellung geformter faserverstärkter Kunststoffgegenstände verwendet. Hier eignen sie sich aber wegen ihrer geringen Festigkeit nur als Kernmaterial, während die Verstärkung der Duroplaste von endlosen Spinnfäden mit höherem Elastizitätsmodul als dem des ausgehärteten Duroplasten erbracht werden muß (DE-B-24 33 427).

Der Erfindung liegt die Aufgabe zugrunde, dem Verarbeiter ein fertiges Verstärkungsmaterial zur Verfügung zu stellen, das alle oben beschriebenen Nachteile der Einarbeitung der Hohlkörperfüllstoffe in den Faserverbundwerkstoff vermeidet, und das eine Verringerung des spezifischen Gewichtes des Faserverbundwerkstoffes ohne Festigkeitseinbußen ermöglicht.

Überraschend wurde nun gefunden, daß es möglich ist, auch die Harzaufnahmefähigkeit und das spezifische Gewicht der üblichen Verstärkungsmaterialien für Duroplaste in Form von Rovings, Garnen oder schwach gedrehten Zwirnen oder daraus hergestellten Geweben, Gewirken oder Gelegen nachhaltig zu vermindern, ohne daß die Festigkeitseigenschaften damit hergestellter Verbundwerkstoffe beeinträchtigt werden, wenn man die im Roving, Garn oder Zwirn parallel angeordneten endlosen Elementarfäden mit hohem Elastizitätsmodul mit einer wässrigen bindemittelfreien Suspension von Partikeln der ungeblähten Vorstufe der Hohlkügelchen aus Kunststoff aufspreizt oder voneinander entfernt und die entstandenen Zwischenräume weitgehend mit den Partikeln ausfüllt und das so erhaltene Material für die erforderliche Dauer der dem Blähprozeß der Partikel der Vorstufe erforderlichen Temperatur aussetzt.

Wenn hier von endlosen Fasern oder Fäden die Rede ist, so sind damit im Gegensatz zu den höchstens wenige Centimeter langen textilen Fasern bzw. Stapelfasern die sehr großen Längen gemeint, in denen die für Verstärkungszwecke üblichen Rovings, Garne oder schwach gedrehten Zwirne in den Handel kommen bzw. auch noch in den daraus hergestellten Geweben, Gewirken oder Gelegen vorliegen.

Durch den Herstellungsprozeß bedingt sind die Elementarfasern in Spinnfäden, Parallelrovings, Endlosgarnen etc. in der Regel mit mehr oder weniger stark klebenden Schlichten versehen. Bei der erfindungsgemäßen Behandlung der endlosen Stränge mit der wässrigen Suspension der ungeblähten Mikrokugeln werden die wasserlöslichen Schlichten oder Bindemittel im Wasser gelöst und damit entfernt. Nur dadurch gelingt es, die Elementarfasern voneinander zu entfernen und wenigstens aufzuspreizen, so daß gleichzeitig die Partikel der ungeblähten Vorstufe der Hohlkügelchen in die entstandenen Zwischenräume eindringen und diese weitgehend ausfüllen können. Bevorzugt geschieht also das Lösen der Elementarfäden voneinander und das Einbringen der ungeblähten Mikrokügelchen gleichzeitig bei der Behandlung der Endlossträngen mit der wässrigen Suspension. Es ist aber auch möglich die den Rovings, Garnen, oder Zwirnen anhaftenden Schlichten oder Bindemittel in einem getrennten Arbeitsgang vor dem Einbringen der Hohlkügelchen zu entfernen, und falls die Schlichte oder Verklebung nicht ausreichend wasserlöslich ist, kann man sich dafür auch eines Lösungsmittels bedienen.

Die Trennung der Elementarfäden voneinander und/oder das Einbringen der ungeblähten Hohlkügelchen in die Faserstränge kann z.B. dadurch geschehen, daß die Faserstränge in dem wässrigen bindemittelfreien Bad einem intensiven Walkprozeß ausgesetzt werden, bei dem die parallel liegenden Elementarfäden der Verstärkungsfasern aufgespreizt werden und dadurch ein inniges Durchdringen mit den Füllstoffpartikeln möglich wird. Man kann die Faserstränge Strahlen mit hohem Druck von beispielsweise 2 bis 10 bar aus Wasser oder der Suspension aussetzen, um die gewünschte Beweglichkeit der Elementarfäden gegeneinander zu erreichen und die ungeblähten Mikrokügelchen dazwischen einzulagern. Für die Behandlung von Geweben, Gewirken oder Gelegen aus den Endlosfasern gilt das gleiche.

Nach dem Einbringen der Partikel werden die Faserstränge oder Bahnen mit geeigneten Mitteln, z.B. Gummilippen oder Durchlaufösen so abgestreift, daß keine ungeblähten Hohlkügelchen lose auf der Oberfläche zurückbleiben. Die auf diese Weise behandelten Faserstränge oder Bahnen werden dann durch einen Trockentunnel gezogen und dort mit Luft und Wärme getrocknet. Die nunmehr lose und trocken zwischen den Fastersträngen eingebetteten Kügelchen können aus den Rovings, Garnen oder schwach gedrehten Zwirnen mit den parallel angeordneten endlosen Elementarfäden trotz Fehlens jeglicher Bindemittel nicht herausfallen, weil die Stränge unter Spannung stehen und die Elementarfäden die zwischen ihnen liegenden Kügelchen einklemmen.

Nach dem Trocknen werden die Faserstränge oder Bahnen bei einer Temperatur von 80 bis 150°C durch einen Heizofen gezogen, wobei die Einwirkungsdauer 15 Sekunden bis etwa 15 Minuten beträgt. Durch die Temperatureinwirkung bläht das Treibgas die Mikrokugeln bis zu einem Durchmesser von etwa 20 bis 300 µm auf, und die expandierenden Mikrohohlkügelchen drücken die Elementarfäden des Faserstranges auseinander und füllen die Zwischenräume weitgehend aus, wodurch sich der Durchmesser des Faserstranges oder die Dicke der daraus hergestellten Flächengebilde um das 2- bis 30-fache vergrößern kann. Der Blähprozeß wird zweckmäßig so geführt, daß die Mikrokügelchen gegen Ende miteinander leicht versintern und gleichzeitig eine gewisse Verbindung zu den Elementarfäden erhalten.

Durch das erfindungsgemäße Verfahren wird ein für Duroplaste geeignetes Verstärkungsmaterial erhalten, das Hohlkörperfüllstoffe einer Partikelgröße zwischen 20 und 300 µm enthält und in dieser Form direkt dem Verarbeiter zur Verfügung gestellt werden kann. Die Harzaufnahmefähigkeit kann je nach Zugabemenge der Füllstoffpartikel und Intensität der Temperaturbehandlung stufenlos bis zu einem Punkt, bei dem keine weitere Aufnahme mehr möglich ist, eingestellt werden.

Als Fasermaterial zur Herstellung des erfindungsgemäßen Duroplast-Verstärkungsmaterials kommen aus Preisgründen vorwiegend Glasfasern in Betracht, jedoch sind Modifikationen des Verstärkungsmaterials durch Verwendung anderer Fasern mit hohem Elastizitätsmodul, wie Kohlenstoff- oder Aramidfasern, möglich.

Als besonders geeignet für die Ausstattung mit Hohlkörperfüllstoffen haben sich Verstärkungsfasern in Form von Geweben oder Gelegen erwiesen.

Die schon oben erwähnten Gelege werden beispielsweise dadurch hergestellt, daß Rovings, Garne oder schwach gedrehte Zwirne aus den Endlosfasern mit Hilfe spezieller Maschinen, z.B. "Malimo"-Nähwerkautomaten definierte Längen, z.B. die Produktionsbreite von etwa 100 cm, abgelängt werden und diese wie Sprossen einer Strickleiter mit Wirkfäden zu einem Flächengebilde verbunden werden. In diesem Fall durchlaufen die Faserstränge den Produktionsprozeß quer und nicht in Längsrichtung. Nach der "Malimo"-Technik können die querliegenden Faserstränge zusätzlich mit längsliegenden Fasersträngen verbunden werden, indem die Stränge an ihren Kreuzungspunkten miteinander vernäht werden.

Eine andere Möglichkeit, endlose Faserstränge zu einem Flächengebilde zu verbinden ist das Verweben. Die Gewebestruktur spielt für die Beschaffenheit des Endprodukts eine wesentliche Rolle. Die Faserstränge, in die nach dem oben beschriebenen Prozeß die Mikrohohlkugeln in der gewünschten Form einbettet werden sollen, dürfen in Kette und/oder Schuß nur sehr lose gebunden sein. Wenn fertige Flächengebilde aufgebläht werden sollen, ergeben sich charakteristische Strukturen, weil das ballonförmige Aufblähen des Faserstranges im wesentlichen nur zwischen den Kreuzungspunkten von Kette und Schuß stattfinden kann, während es an den Kreuzungspunkten zur Einschnürung kommt. Hierdurch erhält das Gelege oder Gewebe das Aussehen von miteinander verbundenen Perlenketten. Durch diese besondere Struktur besitzt das Material für bestimmte Anwendungsbereiche hervorragende Eigenschaften.

Zum Beispiel verzahnen sich beim Aufeinanderlegen meherer Lagen derartiger Flächengebilde die einzelnen Lagen miteinander, wodurch bei Schichtwerkstoffen eine hohe interlaminare Scherfestigkeit zustande kommt. Auch die sich durch die Einschnürungen bildenen Kanäle haben die wünschenswerte Wirkung, daß bei Verwendung des Materials im Preßverfahren oder bei der Vakuuminjektion ein hervorragendes Fließverhalten und gleichmäßiges Verteilen des flüssigen Harzes innerhalb des Formteiles möglich wird.

Sehr enge Gewebe, d.h. Gewebe mit hohen Fadenzahlen in Kette und Schuß, verändern ihre Materialdicke durch den Blähprozess nur uwesentlich. Wenn der Duroplast-Verarbeiter eine Qualität des Laminats mit optimaler Festigkeit wünscht, bei der dann der Anteil der Verstärkungsfasern im Gesamtvolumen des Laminats möglichst hoch sein muß, während der Anteil des Harzes aus Kostengründen jedoch möglichst niedrig sein soll, so kann dies durch Wahl einer Gewebestruktur entstehen, die so eng und fest ist, daß eine Verdickung des Materials kaum möglich ist. Eine starke Ausdehnung des Gewebes während des Blähprozesses kann auch verhindert werden, indem man beispielsweise den Blähprozeß zwischen Abstandshaltern vornimmt, so daß die Kugeln lediglich die Hohlräume zwischen den Elementarfasern ausfüllen können.

Aus einer derartigen Qualität kann beispielsweise auch der gesamte Aufbau eines Laminats, zu des-sen Herstellung das erfindungsgemäße Verstär-kungsmaterial vorzugsweise verwendet wird, ohne zusätzliche Verwendung von Deckschichten hergestellt werden.

Wünscht der Verarbeiter hingegen ein sehr leichtes und voluminöses Material, so kann durch die Wahl von losen und groben Geweben die ursprüngliche Materialstärke um das 2- bis 30-fache, insbesondere 5- bis 10-fache, erhöht werden, d.h. durch Einbettung der Hohlkörperfüllstoffe wird gleichzeitig die Harzaufnahmefähigkeit der Verstärkungsfasern reduziert als auch die Materialstärke gegenüber dem Ausgangsmaterial erhöht. Das durch eine hohe Ausdehnung erhaltene, extrem leichte, mit geringer Harzaufnahme hergestellte Material ist beispielsweise für Laminate mit einer hohen Biegesteifigkeit erwünscht. Die beschriebene Ausführungsform der Erfindung, bei der als Vorstufen für die Flächengebilde Garne, Zwirne und Ro-vings mit ungeblähten Hohlkörperfüllstoffen modifi-ziert werden, bietet - je nachdem, ob das daraus hergestellte Gewebe eine lose oder enge Struktur besitzt - einen Zugang zu Endprodukten mit völlig unterschiedlichen Anwendungsmöglichkeiten.

Für die Herstellung der Verstärkungsmaterialien mit geringerer Harzaufnahmefähigkeit und ver-mindertem spezifischen Gewicht in Flächenform gibt es verschiedene Möglichkeiten:

Man kann die erhaltenen Rovings, Garne oder Zwirne mit den eingelagerten Hohlkügelchen in an sich bekannter Weise zu einem Gewebe, Gewirke oder Gelege verarbeiten.

Man kann die Spreizung der endlosen Elementarfäden und das Einbringen der ungeblähten Vorstufe der Hohlkügelchen aus Kunststoff, wie oben schon beschrieben, mit Geweben, Gewirken oder Gelegen aus Endlosfasern vornehmen und diese dann dem Blähprozeß unterwerfen oder man kann die Rovings, Garne oder Zwirne mit den eingelagerten Partikeln der noch nicht expandierten Hohlkügelchen vor dem Blähprozeß zu einem Gewebe, Gewirke oder Gelege verarbeiten.

Gegenstand der Erfindung ist ferner ein Verstärkungsmaterial für Duroplaste in Form eines Rovings, Garns oder schwach gedrehten Zwirns aus parallel angeordneten, bindemittelfreien, endlosen Elementarfäden mit hohem Elastizitätsmodul, von denen ein wesentlicher Teil aufgespreizt oder voneinander entfernt ist, und bei dem die Hohlräume zwischen den Elementarfäden weitgehend von Hohlkügelchen aus Kunststoff mit 20 bis 300 μm Durchmesser ausgefüllt sind und die Harzaufnahmefähigkeit und das spezifische Gewicht vermindert sind.

Gegenstand der Erfindung ist ferner ein Verstärkungsmaterial für Duroplaste in Form eines Gewebes, Gewirkes oder Geleges aus Garnen, Rovings oder schwach gedrehten Zwirnen mit parallel angeordneten, bindemittelfreien, endlosen Elementarfäden mit hohem Elastizitätsmodul, von denen ein wesentlicher Teil aufgespreizt oder voneinander entfernt ist, und bei dem die Hohlräume zwischen den Elementarfäden weitgehend von Hohlkügelchen aus Kunststoff mit 20 bis 300 μm Durchmes-ser ausgefüllt sind und die Harzaufnahmefähigkeit und das spezifische Gewicht vermindert wird.

Sowohl bei dem strangförmigen, als auch dem flächigen erdindungsgemäßen Verstärkungsmaterial sind die Hohlkügelchen vorzugsweise in einer solchen Menge eingelagert, daß die Dicke das 2- bis 30-fache, insbesondere 5- bis 10-fache der Dicke des Ausgangsmaterials beträgt.

Die erfindungsgemäßen Verstärkungsmaterialien werden bevorzugt zur Herstellung von Leichtlaminaten aus Duroplasten verwendet.

Gegenstand der Erfindung ist damit ferner ein Duroplast-Faserverbundwerkstoff mit geringem spezifischen Gewicht, gekennzeichnet durch ein Verstärkungsmaterial enthaltend Rovings, Garne oder schwach gedrehte Zwirne aus parallel angeordneten endlosen Elementarfäden mit hohem Elastizitätsmodul von denen ein wesentlicher Teil aufgespreizt oder voneinander entfernt ist, und deren Hohlräume zwischen den Elementarfüden weitgehend mit Hohlkügelchen aus Kunststoff mit 20 bis 300 μm Durchmesser ausgefüllt sind.

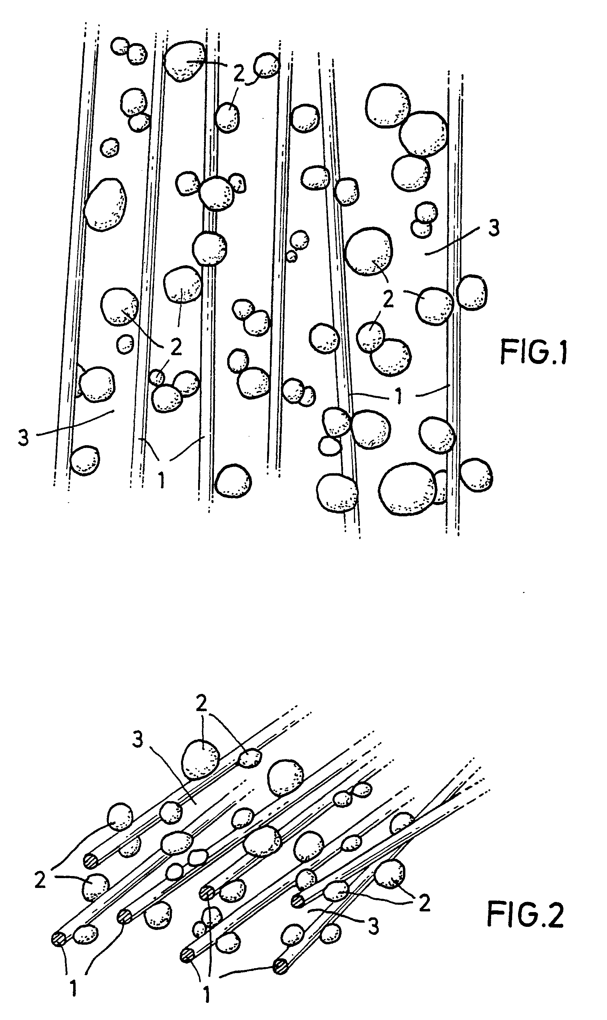

In der Zeichnung ist das erfindungsgemäße Verstärkungsmaterial für Duroplaste schematisch nach Elektronenmikroskop-Aufnahmen in einer Vergrößerung dargestellt, bei der 2,5 cm in den Figuren 1 und 2 etwa 100 μm entsprechen.

Figur 1 zeigt das Material in der Draufsicht, Figur 2 perspektivisch.

Man sieht deutlich die zwischen den einzelnen Glasfasern 1 eingelagerten Kügelchen 2 aus dem aufgeblähten thermoplastischen Kunststoff (thermoplastic microspheres), die aus den ungeblähten Partikeln eines Vinylidenchlorid-Acrylnitril-Copolymeren (unexpanded Expancel® ) durch kurzzeitiges Erhitzen hergestellt wurden. Der Zwischenraum, der für das Auffüllen mit Tränkharz bleibt, ist mit 3 bezeichnet.

Beispiel 1

Ein Parallelroving mit 12240 Endloselementarfasern aus Glas wird mit einer Geschwindigkeit von 2 m pro Minute von einer 10000 m Vorratsspule abgezogen und durch einen Bad einer wässrigen Suspension geführt, die 10 Gew.% unexpanded Expancel® enthält. Der Strang wird in dem Bad Ultraschallwingungen aus einem handelsüblichen Generator ausgesetzt. Äußerlich anhaftende Partikel und überschüssiges Wasser werden beim Durchlaufen des Stranges durch eine entsprechend dimensionierte Öse abgestreift. Der so behandelte Parallelroving hat 8 Gew.% Partikel aufgenommen und wird durch einen Trockentunnel gezogen, in den Heißluft von 80° C eingeführt wird. Anschließend wird der Faserstrang durch einen mit Infrarotstrahlern beheizten Ofen gezogen, den er mit 150° C verläßt. Die Verweildauer im Ofen beträgt 3 Minuten. Die Hohlkügelchen haben im Mittel einen Durchmesser von 60 μm angenommen und der Faserstrang hat seinen Durchmesser um das zehnfache vergrößert.

Beispiel 2

Ein Glasfasergewebe in Leinwandbinung mit einen Kettenmaterial von 68 Tex und 15 Fäden/cm und einem Schußmaterial von 136 Tex und 3 Fäden/cm wurde durch ein Bad gemäß Beispiel 1 geführt und hierbei mit gummierten Walzen gewalkt, Überschüssiges Wasser und oberflächlich anhaftende ungeblähte Mikrokügelchen wurden beim Durchgang zwischen Gummilippen abgestreift. Das Material hat 25 g pro m² der ungeblähten Füllkörper aufgenommen. Es wird dann in einem Heißluftofen getrocknet und in einem Heizofen mit Infrarotstrahlern in 3 Minuten auf eine Endtemperatur von 150° C erhitzt. Die Dicke des Gewebes hat sich durch das Expandieren der Mikrohohlkügelchen verzehnfacht und die durchschnittliche Größe der Hohlkügelchen beträgt 60 μm.

Mehrere Lagen dieses Gewebes wurden abwechselnd mit einem handelsüblichen ungesättigten Polyesterharz in eine Form gelegt. Der Harzauftrag erfolgte mit der Spritzpistole und Ausgleichen mit Entlüfterrollen. Die Harzaufnahme betrug etwa 35 Vol.%. Das spezifische Gewicht des Faserverbundleichtwerkstoffs betrug 0,7 g/cm³.

**Patentansprüche**

1. Verstärkungsmaterial für Duroplaste in Form eines Rovings, Garns oder schwach gedrehten Zwirns aus parallel angeordneten, endlosen Elementarfäden mit hohem Elastizitätsmodul, dadurch gekennzeichnet, daß ein wesentlicher Teil der parallelen, bindemittelfreien Elementarfäden aufgespreizt oder von einander entfernt ist, daß die Hohlräume zwischen den Elementarfäden weitgehend von Hohlkügelchen aus Kunststoff mit 20 bis 300 μm Durchmesser ausgefüllt sind und daß Harzaufnahmefähigkeit und spezifisches Gewicht vermindert sind.

2. Verstärkungsmaterial nach Anspruch 1, dadurch gekennzeichnet, daß die Hohlkügelchen in einer solchen Menge eingelagert sind, daß die Dicke des erzeugten ungebundenen Rovings, Garns oder schwach gedrehten Zwirns das 2- bis 30-fache, insbesondere 5- bis 10-fache der Dicke des Ausgangsmaterials beträgt.

3. Verstärkungsmaterial für Duroplaste in Form eines Gewebes, Gewirkes oder Geleges aus Garnen, Rovings oder schwach gedrehten Zwirnen mit parallel angeordneten, endlosen Elementarfäden mit hohem Elastizitätsmodul, dadurch gekennzeichnet, daß ein wesentlicher Teil der parallelen, bindemittelfreien Elementarfäden aufgespreizt oder von einander entfernt ist, daß diese Hohlräume zwischen den Elementarfäden weitgehend von Hohlkügelchen aus Kunststoff mit 20 bis 300 μm Durchmesser ausgefüllt sind und daß Harzaufnahmefähigkeit und spezifisches Gewicht vermindert sind.

4. Verstärkungsmaterial nach Anspruch 3, dadurch gekennzeichnet, daß die Hohlkügelchen in einer solchen Menge eingelagert sind, daß die Dicke des erzeugten ungebundenen Gewebes, Gewirkes oder Geleges das 2-bis 30-fache, insbesondere 5- bis 10-fache der Dicke des Ausgangsmaterials beträgt.

5. Verstärkungsmaterial nach einem der Ansprüche 1 bis 4, dadurch gekennzeichnet, daß die Fasern mit hohem Elastizitätsmodul aus Glas-, Kohlenstoff- oder Aramidfasern bestehen.

6. Verstärkungsmaterial nach einem der Ansprüche 1 bis 5, dadurch gekennzeichnet, daß die Reindichte des Hohlkörperfüllstoffs 0,02 - 0,2 kg/dm³ beträgt.

7. Verstärkungsmaterial nach einem der Ansprüche 1 bis 6, dadurch gekennzeichnet, daß die Aufnahmefähigkeit für flüssige härtbare Harze, insbesondere Epoxyharze oder ungesättigte Polyesterharze, durch die Menge des eingelagerten Hohlkörperfüllstoffs auf den gewünschten Wert eingestellt ist.

8. Verstärkungsmaterial nach einem der Ansprüche 1 bis 7, dadurch gekennzeichnet, daß die Hohlkügelchen aus einem Thermoplasten bestehen.

9. Verfahren zur Herstellung eines Verstärkungsmaterials nach einem der Ansprüche 1 bis 8, dadurch gekennzeichnet, daß man die in einem Roving, Garn oder schwach gedrehten Zwirn parallel angeordneten endlosen Elementarfäden mit hohem Elastizitätsmodul mit einer wässrigen bindemittelfreien Suspension von Partikeln der ungeblähten Vorstufe der Hohlkügelchen aus Kunststoff einer Teilchengröße von 5 bis 10 $\mu$m aufspreizt oder von einander entfernt und die entstandenen Zwischenräume weitgehend mit den Partikeln ausfüllt und das so erhaltene Material für die erforderliche Dauer der für den Blähprozess der Partikel der Vorstufe erforderlichen Temperatur aussetzt.

10. Verfahren nach Anspruch 9, dadurch gekennzeichnet, daß man die erhaltenen Rovings, Garne oder Zwirne mit den eingelagerten Hohlkügelchen zu einem Gewebe, Gewirke oder Gelege verarbeitet.

11. Verfahren nach Anspruch 9, dadurch gekennzeichnet, daß man Rovings, Garne oder schwach gedrehte Zwirne behandelt, die schon in Form eines Gewebes, Gewirkes oder Geleges vorliegen.

12. Verfahren nach Anspruch 9, dadurch gekennzeichnet, daß man die Rovings, Garne oder Zwirne mit den eingelagerten Partikel der ungeblähten Vorstufe der Hohlkügelchen vor dem Blähprozeß zu einem Gewebe, Gewirke oder Gelege verarbeitet.

13. Verfahren nach einem der Ansprüche 9 bis 12, dadurch gekennzeichnet, daß zum Einbringen der Partikel der ungeblähten Vorstufe in die Garne, Zwirne oder Rovings oder die daraus hergestellten textilen Flächengebilde diese in einem Bad einer wässrigen bindemittelfreien Suspension der Partikel einem intensiven Walkprozess ausgesetzt werden.

14. Verfahren nach einem der Ansprüche 9 bis 13, dadurch gekennzeichnet, daß die Menge der Partikel der ungeblähten Vorstufe des Hohlkörperfüllstoffs so bemessen wird, daß die Dicke des Ausgangsmaterials nach dem Aufblähen der Vorstufe zu den Hohlkügelchen um das 2- bis 30-fache insbesondere 5- bis 10-fache erhöht wird.

15. Verfahren der Ansprüche 9 bis 14, dadurch gekennzeichnet, daß die Fasern mit hohem Elastizitätsmodul aus Glas-, Kohlenstoff- oder Aramidfasern bestehen.

16. Verfahren nach einem der Ansprüche 5 bis 15, dadurch gekennzeichnet, daß die Aufnahmefähigkeit für flüssige härtbare Harze, insbesondere Epoxyharze oder ungesättigte Polyesterharze, durch die Menge des eingelagerten Hohlkörperfüllstoffs auf den gewünschten Wert eingestellt wird.

17. Verfahren nach einem der Ansprüche 9 bis 16, dadurch gekennzeichnet, daß die Temperatur für den Blähprozeß 80 - 150 °C beträgt.

18. Verfahren nach einem der Ansprüche 9 bis 17, dadurch gekennzeichnet, daß man den Blähprozeß zwischen Abstandshaltern vornimmt.

19. Verwendung des Verstärkungsmaterials nach einem der Ansprüche 1 bis 8 zur Herstellung von Leichtlaminaten aus Duroplasten.

20. Duroplast-Faser-Verbundwerkstoff mit geringem spezischen Gewicht, gekennzeichnet durch ein Verstärkungsmaterial enthaltend Rovings, Garne oder schwach gedrehte Zwirne aus parallel angeordneten endlosen Elementarfäden mit hohem Elastizitätsmodul von denen ein wesentlicher Teil aufgespreizt oder von einander entfernt ist, und deren Hohlräume zwischen den Elementarfäden weitgehend mit Hohlkügelchen aus Kunststoff mit 20 bis 300 $\mu$m Durchmesser ausgefüllt sind.

## Claims

1. Reinforcement material for duroplastics in the form of a roving, yarn or lightly twisted plied yarn of parallel endless filaments having a high modulus of elasticity, characterised in that a substantial portion of the parallel, binder-free filaments are splayed out or distanced from each other, that the cavities between the filaments are largely filled by hollow plastic microspheres of a diameter of 20 to 300 $\mu$m and that resin absorption capacity and specific weight are reduced.

2. Reinforcement material according to claim 1, characterised in that the hollow microspheres are incorporated in such a quantity that the thickness of the unbound roving, yarn or lightly twisted plied yarn produced is 2 to 30 times, in particular 5 to 10 times, the thickness of the starting material.

3. Reinforcement material for duroplastics in the form of a woven fabric, knitted fabric or nonwoven fabric of yarns, rovings or lightly twisted plied yarns with parallel endless filaments having a high modulus of elasticity, characterised in that a substantial portion of the parallel, binder-free filaments are splayed out or distanced from each other, that these cavities between the filaments are largely filled by hollow plastic microspheres of a diameter of 20 to 300 $\mu$m and that resin absorption capacity and specific weight are reduced.

4. Reinforcement material according to claim 3, characterised in that the hollow microspheres are incorporated in such a quantity that the thickness of the unbound woven fabric, knitted fabric or nonwoven fabric produced is 2 to 30 times, in particular 5 to 10 times, the thickness of the starting material.

5. Reinforcement material according to one of claims 1 to 4, characterised in that the fibres having a high modulus of elasticity consist of glass fibres, carbon fibres or aramide fibres.

6. Reinforcement material according to one of claims 1 to 5, characterised in that the theoretical density of the hollow body filler is 0.02 - 0.2 kg/dm$^3$.

7. Reinforcement material according to one of claims 1 to 6, characterised in that the absorption capacity for liquid thermosetting resins, in particular epoxy resins or unsaturated polyester resins, is set to the desired value by the quantity of the incorporated hollow body filler.

8. Reinforcement material according to one of claims 1 to 7, characterised in that the hollow microspheres are made of a thermoplastic.

9. Process for producing a reinforcement material according to one of claims 1 to 8, characterised in that the parallel endless filaments of high modulus of elasticity arranged in a roving, yarn or lightly twisted plied yarn are splayed out or spaced apart from each other with an aqueous binder-free suspension of particles of the non-expanded preceding stage of the plastic hollow microspheres having a particle size of 5 to 10 $\mu$m and the resulting gaps are largely filled with the particles and the material thus obtained is exposed to the temperature necessary for the expanding process of the particles of the preceding stage for the time required.

10. Process according to claim 9, characterised in that the resulting rovings, yarns or plied yarns with the incorporated hollow microspheres are processed to form a woven fabric, knitted fabric or nonwoven fabric.

11. Process according to claim 9, characterised in that rovings, yarns or lightly twisted plied yarns which are already in the form of a woven fabric, knitted fabric or nonwoven fabric are treated.

12. Process according to claim 9, characterised in that the rovings, yarns or plied yarns with the incorporated particles of the non-expanded preceding stage of the hollow microspheres are processed into a woven fabric, knitted fabric or nonwoven fabric before the expanding process.

13. Process according to one of claims 9 to 12, characterised in that in order to introduce the particles of the non-expanded preceding stage into the yarns, plied yarns or rovings or the fabric made therefrom, they are subjected to an intensive fulling process in a bath of an aqueous binder-free suspension of the particles.

14. Process according to one of claims 9 to 13, characterised in that the quantity of particles of the non-expanded preceding stage of the hollow body filler is calculated so that the thickness of the starting material after the expanding of the preceding stage to the hollow microspheres is increased by 2 to 30 times, in particular 5 to 10 times.

15. Process of claims 9 to 14, characterised in that the fibres having a high modulus of elasticity consist of glass fibres, carbon fibres or aramide fibres.

16. Process according to one of claims 5 to 15, characterised in that the absorption capacity for liquid thermosetting resins, in particular epoxy resins or unsaturated polyester resins, is set to the desired value by the quantity of the incorporated hollow body filler.

17. Process according to one of claims 9 to 16, characterised in that the temperature for the expanding process is 80 - 150° C.

18. Process according to one of claims 9 to 17, characterised in that the expanding process is carried out between spacers.

19. Use of the reinforcement material according to one of claims 1 to 8 for producing light laminates from duroplastics.

20. Duroplastic-fibre composite material of low specific weight, characterised by a reinforcement material containing rovings, yarns or lightly twisted plied yarns of parallel endless filaments having a high modulus of elasticity, of which a substantial portion is splayed out or distanced from each other, and the cavities of which between the filaments are largely filled by hollow plastic microspheres of a diameter of 20 to 300 $\mu$m.

## Revendications

1. Matériau de renforcement pour duroplastes sous forme d'un roving, d'un filé ou d'un fil retors à faible torsion constitué de filaments élémentaires à disposition parallèle ayant un haut module d'élasticité, caractérisé en ce qu'une proportion importante des filaments élémentaires parallèles sans liant sont écartés ou éloignés les uns des autres, en ce que les espaces vides entre les filaments élémentaires sont largement comblés par des microsphères creuses de matière plastique d'un diamètre de 20 à 300 $\mu$m et en ce que la capacité d'absorption de résine et la densité sont réduites.

2. Matériau de renforcement selon la revendication 1, caractérisé en ce que les microsphères creuses sont insérées en une quatité telle que l'épaisseur du roving, du filé ou du fil retors à faible torsion non lié produit s'élève à 2-30 fois, notamment à 5-10 fois l'épaisseur de la matière de départ.

3. Matériau de renforcement pour duroplastes sous forme d'un tissu, d'un tissu à mailles ou d'un non tissé, de rovings ou de fils retors à faible torsion constitués de filaments élémentaires à disposition parallèle ayant un haut module d'élasticité, caractérisé en ce qu'une proportion importante des filaments élémentaires parallèles sans liant sont écartés ou éloignés les uns des autres, en ce que les espaces vides entre les filaments élémentaires sont largement comblés par des microsphères creuses en matière plastique d'un diamètre de 20 à 300 $\mu$m et en ce que la capacité d'absorption de résine et la densité sont réduites.

4. Matériau de renforcement selon la revendication 3, caractérisé en ce que les microsphères creuses sont insérées en une quantité telle que l'épaisseur du tissu, du tissu à mailles ou du non tissé non lié produit s'élève à 2-30 fois, notamment à 5-10 fois l'épaisseur de la matière de départ.

5. Matériau de renforcement selon l'une des revendications 1 à 4, caractérisé en ce que les fibres à haut module d'élasticité sont constituées de fibres de verre, de carbone ou d'aramide.

6. Matériau de renforcement selon l'une des revendications 1 à 5, caractérisé en ce que la masse volumique vraie de la charge de corps creux est de 0,02-0,2 kg/dm$^3$.

7. Matériau de renforcement selon l'une des revendications 1 à 6, caractérisé en ce que la capacité d'absorption à l'égard des résines durcissables liquides, notamment des résines époxy ou des résines de type polyesters non saturés, est réglée à la valeur désirée par la quantité de charge introduite formée de corps creux.

8. Matériau de renforcement selon l'une des revendications 1 à 7, caractérisé en ce que les microsphères creuses sont constituées d'une matière thermoplastique.

9. Procédé de production d'un matériau de renforcement selon l'une des revendications 1 à 8, caractérisé en ce que les filaments élémentaires à disposition parallèle dans un roving, un filé ou un fil retors à faible torsion, de haut module d'élasticité, sont écartés ou éloignés les uns des autres avec une suspension aqueuse sans liant de particules du stade préalable non gonflé des microsphères creuses en matière plastique en particules d'un diamètre de 5 à 10 $\mu$m et les espaces vides créés sont largement comblés avec les particules et le matériau ainsi obtenu est exposé pendant la durée voulue à la température nécessaire pour le processus de gonflement des particules du stade préalable.

10. Procédé selon la revendication 9, caractérisé en ce qu'on met en oeuvre les rovings, les filés ou les fils retors obtenus avec les microsphères creuses insérées pour obtenir un tissu, un tissu à mailles ou un non tissé.

11. Procédé selon la revendication 9, caractérisé en ce qu'on traite les rovings, les filés ou les fils retors à faible torsion qui présentent déjà la forme d'un tissu, d'un tissu à mailles ou d'un non tissé.

**12.** Procédé selon la revendication 9, caractérisé en ce qu'on met en oeuvre les-rovings, les filés ou les fils retors avec les particules insérées du stade préalable non gonflé des microsphères creuses avant le processus de gonflement pour former un tissu, un tissu à mailles ou un non tissé.

**13.** Procédé selon l'une des revendications 9 à 12, caractérisé en ce que les filés, les fils retors ou les rovings ou les corps plans textiles produits à partir d'eux sont exposés, en vue d'y introduire les particules du stade préalable non gonflé, à un processus de foulage intensif dans un bain d'une suspension aqueuse sans liant des particules.

**14.** Procédé selon l'une des revendications 9 à 13, caractérisé en ce qu'on calcule la quantité de particules du stade préalable non gonflé de la charge de corps creux de manière que l'épaisseur de la matière de départ après le gonflement du stade préalable en microsphères creuses soit élevée d'un facteur 2 à 30 et, notamment de 5 à 10.

**15.** Procédé selon les revendications 9 à 14, caractérisé en ce que les fibres à haut module d'élasticité sont constituées de fibres de verre, de carbone ou d'aramide.

**16.** Procédé selon l'une des revendications 5 à 15, caractérisé en ce que la capacité d'absorption à l'égard de résines durcissables liquides, notamment de résines époxy ou de résines de type polyester non saturé, est réglée à la valeur désirée par la quantité de charge introduite formée de corps creux.

**17.** Procédé selon l'une des revendications 9 à 16, caractérisé en ce que la température du processus de gonflement s'élève à 80-150 °C.

**18.** Procédé selon l'une des revendications 9 à 17, caractérisé en ce qu'on conduit le processus de gonflement entre deux écarteurs.

**19.** Utilisation du matériau de renforcement selon l'une des revendications 1 à 8 pour la production d'agglomérés laminés légers en duroplastes.

**20.** Matériau composite de fibre duroplaste de faible densité, caractérisé par un matériau de renforcement contenant des rovings, des filés ou des fils retors à faible torsion constitués de filaments élémentaires à disposition parallèle, de haut module d'élasticité, qui sont écartés ou éloignés les uns des autres dans une proportion importante, et dont les espaces vides entre les filaments élémentaires sont largement comblés de microsphères creuses en matière plastique ayant un diamètre de 20 à 300 $\mu$m.

FIG.1

FIG.2